# EUROPEAN PATENT APPLICATION

(11) **EP 4 807 175 A1**
(43) Date of publication of application: **16.09.2026**
(21) Application number: 25382222.5
(22) Date of filing: 11.03.2025
(51) Int. Cl.: F03D 13/20, E04H 12/08, E04H 12/12, E04H 12/16

(54) **ADAPTER OF A TOWER OF A WIND TURBINE TOWER AND METHOD OF ERECTING THE TOWER COMPRISING THE ADAPTER**

(71) Applicant: Nordex Energy SE & Co. KG, 22419 Hamburg (DE)
(72) Inventor: Franke, Michael, Hamburg (DE); Puttkammer, Morten, Hamburg (DE)
(74) Representative: Pons IP

(57) **Abstract**

The object of the invention is an adapter of a tower of a wind turbine wherein the tensioning elements are completely disposed in the space defined by the inner wall in the interior of the tower, thus avoiding the passage of the tensioning elements partially or completely by the at least one concrete segment of the at least one concrete section of the tower, and a wind turbine comprising a tower which in turn comprises the adapter and the method of erecting the tower comprising the adapter.

## Description

### OBJECT OF THE INVENTION

The object of the invention is an adapter of a tower of a wind turbine wherein the tensioning elements are completely disposed in the space defined by the inner wall in the interior of the tower, thus avoiding the passage of the tensioning elements partially or completely by the at least one concrete segment of the at least one concrete section of the tower.

The invention also relates to a wind turbine comprising a tower which in turn comprises the adapter and the method of erecting the tower comprising the adapter.

### BACKGROUND OF THE INVENTION

The wind turbines comprise a tower, a nacelle which houses the electrical generator and a rotor formed in turn by at least two blades. The tower of the wind turbine supports the nacelle and the rotor. Large wind turbines have steel, lattice, or reinforced concrete towers or even mixed-type towers, the latter comprising sections of different materials, for example, a lower section of concrete and an upper section of steel or lattice.

Due to the height of the wind turbines, the tower has to be divided into several annular sections which are stacked during the wind turbine assembly stage thus forming the full height of the tower. Dividing the tower into sections has the advantage that each section has a size such that its transport by road or rail is easier.

One of the most commonly used materials for large towers is concrete, since it involves competitive costs and performance compared to those to produce steel towers of similar characteristics. However, the weight of each concrete tower section can easily exceed one hundred tons, this fact being infrequent for metal tower sections, so stacking the concrete sections requires heavy-tonnage lifting and positioning means. The cost of using such lifting and positioning means, which may be for example a crane, is directly related to the tonnage and height that it is capable of handling and the time of use thereof. This high-tonnage crane is also used for lifting and positioning the nacelle, as the weight of the nacelle may also exceed 100 tons.

It is known in the state of the art, the towers for wind turbines being of the kind of "concrete-steel hybrid" towers comprising a first tower section comprising at least two concrete segments and further comprising a second tower section made of steel, the tower further comprising an adapter for connecting the two tower sections, and the towers for wind turbines being of the kind of "full-concrete" towers comprising an adapter disposed in the upper part of the upper concrete tower section and below a wind turbine component, the wind turbine component being preferably the yaw bearing of the nacelle.

In both cases, i.e., for full concrete towers and concrete-stell hybrid towers, the concrete sections need pre-tension, because concrete can only carry loads under compression. To apply pre-tension there are tendons made from steel which need an anchor point in the bottom and an anchor point in the top of the concrete part. In the bottom the tendons are anchored in or at the foundation. This is a proven solution which normally works well. In the top there is usually a transition piece installed made essentially from reinforced concrete where the tendons are anchored by anchor heads. Most of the designs of towers are done with external pre-tension. This means the tendons are on the inner side of the concrete wall elements. Therefore, the pre-tension introduces a bending into the transition piece. This bending is absorbed by anchor bolts which connect in addition the steel part or the components of the wind turbine. According to this design, the compression which needs to be introduced into the concrete wall elements cross the transition piece. This is an inherent disadvantage of the associated to the transition piece made of concrete.

In a first embodiment, the adapter comprises an annular concrete element and a steel element that has at least one annular flange, wherein the flange covers an upper surface of the concrete element of the adapter in installation position. Consequently, this adapter consists of concrete and steel, in which case the steel element is cast directly with the concrete element of the adapter. Here, the annular flange of the steel element is fully grouted in the concrete without air inclusions. In a related method for building the tower, the steel element with an annular flange is initially provided for building the adapter, which is installed headlong in a ring-shaped formwork. Afterwards, concrete is placed in the formwork and as a result of that, the annular concrete element of the adapter can be made. Here, the concrete is placed directly on the underside of the flange so that, in the finished adapter, the flange is fully grouted establishing a connection between the concrete element and the steel element of the adapter.

In a second embodiment, the adapter is made entirely of steel, and a grout layer must be disposed between the adapter and the first tower section made of concrete to establish a connection between the steel adapter and the concrete section.

However, in both embodiments, the adapter is joined to the immediately below concrete part or section by means of bolts passing through a first set of holes. The adapter also comprises a second set of holes for allowing the passage of tensioning elements of the tower. The first set of holes and the second set of holes are disposed in concentrical circumferences with different radius, thus needing more material and complex system for attaching auxiliary devices of the tower.

The present invention solves the problems described above.

### DESCRIPTION OF THE INVENTION

The invention relates to an adapter of a tower of a wind turbine, wherein the tower comprises the adapter, a central vertical axis, at least one concrete section and at least one tensioning element configured to tension the tower;
wherein the concrete section comprises:
   - at least one concrete segment comprising an inner wall which in turn comprises an upper end; and
wherein the adapter comprises:
   - a lower flange configured to be joined to the at least one concrete segment;
   - an upper flange configured to be joined to an upper steel section or a wind turbine component; and
   - a central portion joining the lower flange and the upper flange;
wherein the at least one tensioning element is fixed in the adapter at a first distance from the central vertical axis, wherein the first distance is smaller than a second distance defined from the central vertical axis to the inner wall of the at least one concrete segment.

The first distance is measured in a horizontal direction from the central vertical axis to the position of the adapter wherein the at least one tensioning element is fixed. Specifically, the position of the adapter wherein the at least one tensioning element is fixed is defined by an axis of the at least one tensioning element once the at least one tensioning element is fixed in the adapter.

The second distance is measured in a horizontal direction from the central vertical axis to the inner wall of the at least one concrete element in contact with the adapter.

So configured, the area of the adapter wherein the at least one tensioning element is located is separated from the inner wall of the at least one concrete segment. In this way, the tensioning elements are completely disposed in the space defined by inner wall in the interior of the tower, thus avoiding the passage of the tensioning elements partially or completely by the at least one concrete segment of the at least one concrete section of the tower. Furthermore, the adapter is lighter than the transition piece of the state of the art that is made essentially of reinforced concrete where the tendons are anchored by anchor heads. Moreover, it is possible to dispose a rubber layer instead of grout between the lower flange and the at least one concrete segment, thus reducing the time required to conform the joint between the concrete section and the adapter. In this way, the width of the lower flange of the adapter can be adjusted to the width of the at least one concrete segment.

Optionally, the first distance is smaller than the second distance defined from the central vertical axis to the inner wall of the at least one concrete segment at a height corresponding to the upper end of the inner wall of the at least one concrete segment.

Optionally, the at least one tensioning element is separated, in a horizontal direction, from the inner wall of the at least one concrete segment.

Optionally, lower flange is attached to the at least one concrete segment in such a way that the lower flange is continuous along a circumferential direction of the at least one concrete segment. So, there are no holes in the lower flange, nor in the at least one concrete segment for the passage of the at least one tensioning element.

Optionally, the adapter further comprises a horizontal flange which in turn comprises at least one hole disposed at the first distance from the central vertical axis, wherein the at least one hole is intended to allow the passage, in use, of the at least one tensioning element.

Preferably, the at least one hole comprises an axis, wherein the axis is disposed at the first distance from the central vertical axis.

Optionally, the at least one tensioning element comprises an anchor head configured to rest on the horizontal flange.

Optionally, the horizontal flange is located at the same height as the lower flange.

Optionally, the horizontal flange is located at the same height as the upper flange.

Optionally, the horizontal flange is located at the same height as the upper flange.

Optionally, the horizontal flange is located between the lower flange and the upper flange.

Preferably, the horizontal flange is a circumferential horizontal flange.

Optionally, the horizontal flange in turn comprises a plurality of holes configured to allow passage of the plurality of tensioning elements; wherein the horizontal flange comprises holes exclusively of the type of the plurality of holes configured to allow the passage, in use, of the plurality of tensioning elements.

Optionally, the central portion comprises at least one inner vertical rib configured to support the horizontal flange.

So configured, it is possible carry out a better positioning of anchor heads by machining the at least one vertical rib on the adapter, the grout for carrying out the fixation of the adapter to the concrete section can be made by means of cannels, specific seals for grout can be introduced, and the adjustment before grouting is possible with the adjustment by means of bolts and threads, for example.

Optionally, the at least one inner vertical rib is essentially perpendicular to the central portion. **In** this way, it is only necessary to include the at least one inner vertical rib in those areas of the perimeter of the adapter wherein the tensioning elements are disposed, thus reducing the amount of material of the adapter.

Optionally, the at least one inner vertical rib comprises an internal edge and a width defined by the horizontal distance between the central portion and the internal edge of the at least one inner vertical rib.

Preferably, the width of the at least one vertical rib is variable along at least partially, a height of the central portion.

Also preferably, the width of the at least one vertical rib decreases from the lower flange to the upper flange.

Also preferably, the width of the at least one vertical rib decreases from the lower flange to an intermediate position between the lower flange and the upper flange.

Also preferably, the width of the at least one vertical rib increases from the lower flange to the upper flange.

Also preferably, the width of the at least one vertical rib increases from the lower flange to an intermediate position between the lower flange and the upper flange.

Optionally, the adapter is made of steel or cast iron.

**The** invention also relates to a tower of a wind turbine comprising the adapter described above, a central vertical axis, at least one concrete section comprising at least one concrete segment and at least one tensioning element configured to tension the tower;

Optionally, the tower further comprises at least one steel section disposed above the adapter.

Optionally, the tower further comprises a set of bolts configured to join the at least one steel section to the adapter. Preferably, the set of bolts are configured to join the at least one steel section to the upper flange of the adapter.

Optionally, the at least one tensioning element is anchored to the horizontal flange by means of anchor heads.

The invention also relates to a method of erecting a tower of a wind turbine, wherein the tower comprises the adapter, a central vertical axis, at least one concrete section and at least one tensioning element configured to tension the tower;
wherein the concrete section comprises:
   - at least one concrete segment comprising an inner wall which in turn comprises an upper end; and
wherein the adapter comprises:
   - a lower flange configured to be joined to the at least one concrete segment;
   - an upper flange configured to be joined to an upper steel section or a wind turbine component; and
   - a central portion joining the lower flange and the upper flange;
wherein the at least one tensioning element is fixed in the adapter at a first distance from the central vertical axis, wherein the first distance is smaller than a second distance defined from the central vertical axis to the inner wall of the at least one concrete segment.
   wherein the method comprises:
   - a step of erecting the concrete section;
   - a step of erecting the adapter above the concrete section;
   - a step of tensioning the tower by anchoring the at least one tensioning element to the adapter at a first distance from the central vertical axis, wherein the first distance is smaller than a second distance defined from the central vertical axis to the inner wall of the at least one concrete segment.

### DESCRIPTION OF THE FIGURES

To complement the description being made and for the sake of a better understanding of the characteristics of the invention according to a preferred practical embodiment thereof, attached as an integral part of said description are a set of drawings wherein, for the purpose of illustration and not limiting the scope of the invention, the following is shown:

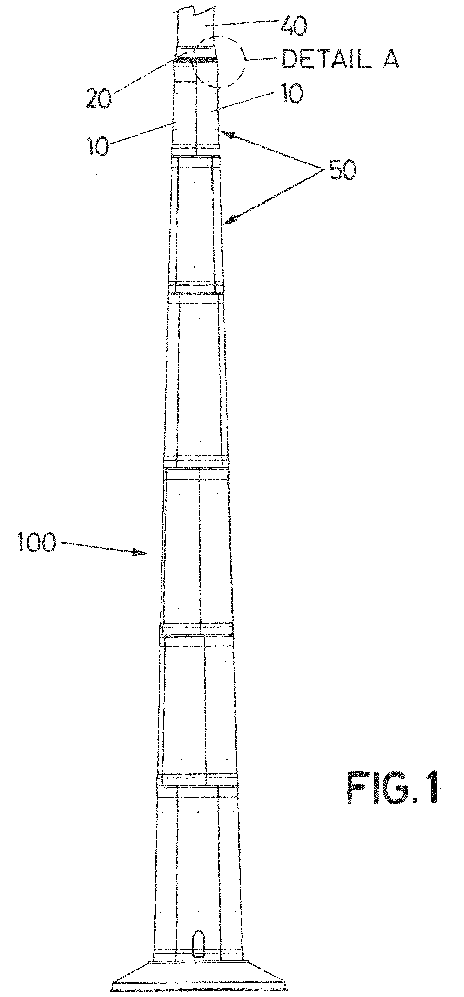

Figure 1 shows an elevation view of a tower of a wind turbine comprising an adapter according to the invention.
Figure 2 shows a first embodiment of a detail A shown in Figure 1, wherein it is shown the concrete section, the adapter disposed above the concrete section and a steel section disposed above the adapter.
Figure 3 shows a second embodiment of the detail A shown in Figure 1, wherein it is shown the concrete section, the adapter disposed above the concrete section and a steel section disposed above the adapter.

### PREFERRED EMBODIMENT OF THE INVENTION

The following is a detailed description of the adapter (20) of a tower (100) of a wind turbine, wherein the tower (100) comprises the adapter (20), a central vertical axis (A1), at least one concrete section (50) and at least one tensioning element (30) configured to tension the tower (100);
wherein the concrete section (50) comprises:
   - at least one concrete segment (10) comprising an inner wall (12) which in turn comprises an upper end (13); and
wherein the adapter (20) comprises:
   - a lower flange (1) configured to be joined to the at least one concrete segment (10);
   - an upper flange (2) configured to be joined to an upper steel section (40) or a wind turbine component; and
   - a central portion (3) joining the lower flange (1) and the upper flange (2);
wherein the at least one tensioning element (30) is disposed in the adapter (20) at a first distance (d1) from the central vertical axis (A1), wherein the first distance (d1) is smaller than a second distance (d2) defined from the central vertical axis (A1) to the inner wall (12) of the at least one concrete segment (10).

Preferably, the first distance (d1) is smaller than the second distance (d2) defined from the central vertical axis (A1) to the inner wall (12) of the at least one concrete segment (10) at a height corresponding to the upper end (13) of the inner wall (12) of the at least one concrete segment (10).

Preferably, the adapter further comprises a horizontal flange (5) which in turn comprises at least one hole (6) disposed at the first distance (d1) from the central vertical axis (A1), wherein the at least one hole (6) is intended to allow the passage, in use, of the at least one tensioning element (30). The at least one tensioning element comprises an axis (A2) and the at least one hole (6) comprises an axis (A3), wherein both axes (A2, A3) are coincident when the at least one tensioning element (30) is fixed in the at least one hole (6) of the adapter (20).

Preferably, the horizontal flange (5) comprises a plurality of holes (6) configured to allow passage of the plurality of tensioning elements (30); wherein the horizontal flange (5) comprises holes (6) exclusively of the type of the plurality of holes (6) configured to allow the passage, in use, of the plurality of tensioning elements (30).

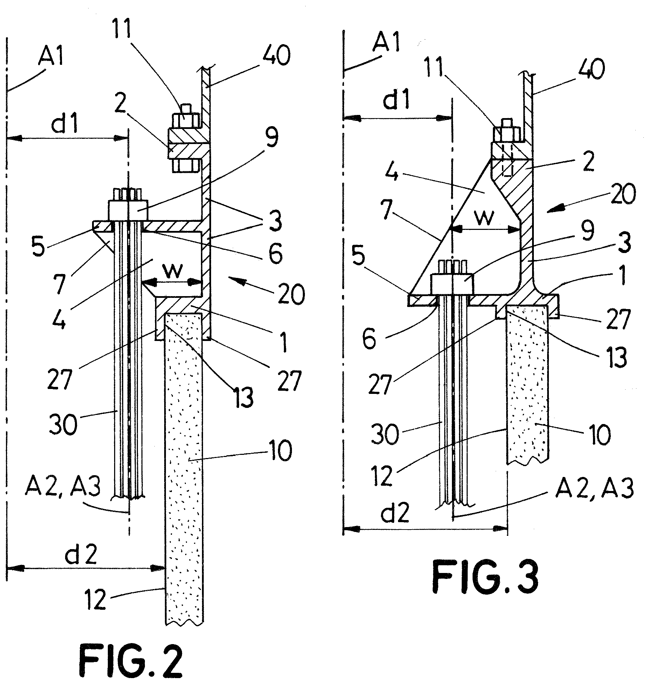

In a first preferred embodiment shown in Figure 2, the horizontal flange (5) is located between the lower flange (1) and the upper flange (2).

In a second preferred embodiment shown in Figure 3, the horizontal flange (5) is located at the same height as the lower flange (1).

In the two embodiments shown in Figures 2 and 3, the horizontal flange (5) is a circumferential horizontal flange.

In the two embodiments shown in Figures 2 and 3, the central portion (3) of the adapter (20) comprises at least one inner vertical rib (4) configured to support the horizontal flange (5). Preferably, the at least one inner vertical rib (4) is essentially perpendicular to the central portion (3).

In the first preferred embodiment shown in Figure 2, the at least one inner vertical rib (4) comprises an internal edge (7) and a width (W) defined by the horizontal distance between the central portion (3) and the internal edge (7) of the at least one inner vertical rib (4), wherein the width (W) of the at least one vertical rib (4) is increasing from the lower flange (1) to an intermediate position between the lower flange (1) and the upper flange (2).

In this embodiment, the adapter (20) is made of steel.

In the second preferred embodiment shown in Figure 3, the horizontal flange (5) is located between the lower flange (1) and the upper flange (2).

In this embodiment, the at least one inner vertical rib (4) comprises an internal edge (7) and a width (W) defined by the horizontal distance between the central portion (3) and the internal edge (7) of the at least one inner vertical rib (4), wherein the width (W) of the at least one vertical rib (4) is decreasing from the lower flange (1) to the upper flange (2).

In this embodiment, the adapter (20) is made of cast iron.

The invention also relates to a tower (100) of a wind turbine comprising the adapter (20) of any one of the two embodiments described above, a central vertical axis (A1), at least one concrete section (50), at least one steel section (40) disposed above the adapter (20) and at least one tensioning element (30) configured to tension the tower (100); and
a set of bolts (11) configured to join the at least one steel section (40) to the adapter (20);
wherein the at least one concrete section (50) comprises:
   - at least one concrete segment (10).

Preferably, the at least one tensioning element (30) is anchored to the horizontal flange (5) by means of anchor heads (9).

Preferably, the set of bolts are configured to join the at least one steel section to the upper flange (2) of the adapter (20).

## Claims

1. Adapter (20) of a tower (100) of a wind turbine, wherein the tower (100) comprises the adapter (20), a central vertical axis (A1), at least one concrete section (50) and at least one tensioning element (30) configured to tension the tower (100);
wherein the concrete section (50) comprises:
- at least one concrete segment (10) comprising an inner wall (12) which in turn comprises an upper end (13); and
wherein the adapter (20) comprises:
- a lower flange (1) configured to be joined to the at least one concrete segment (10);
- an upper flange (2) configured to be joined to an upper steel section (40) or a wind turbine component; and
- a central portion (3) joining the lower flange (1) and the upper flange (2);
**characterized in that** the at least one tensioning element (30) is disposed in the adapter (20) at a first distance (d1) from the central vertical axis (A1), wherein the first distance (d1) is smaller than a second distance (d2) defined from the central vertical axis (A1) to the inner wall (12) of the at least one concrete segment (10).

2. The adapter of claim 1, wherein the first distance (d1) is smaller than the second distance (d2) defined from the central vertical axis (A1) to the inner wall (12) of the at least one concrete segment (10) at a height corresponding to the upper end (13) of the inner wall (12) of the at least one concrete segment (10).

3. The adapter of any of claims 1 or 2, further comprising a horizontal flange (5) which in turn comprises at least one hole (6) disposed at the first distance (d1) from the central vertical axis (A1), wherein the at least one hole (6) is intended to allow the passage, in use, of the at least one tensioning element (30).

4. The adapter of claim 3, wherein the horizontal flange (5) is located at the same height as the lower flange (1).

5. The adapter of claim 3, wherein the horizontal flange (5) is located at the same height as the upper flange (2).

6. The adapter of claim 3, wherein the horizontal flange (5) is located between the lower flange (1) and the upper flange (2).

7. The adapter of any of claims 3 to 6, wherein the horizontal flange (5) is a circumferential horizontal flange.

8. The adapter of any of claims 3 to 7, wherein the central portion (3) comprises at least one inner vertical rib (4) configured to support the horizontal flange (5).

9. The adapter of claim 8, wherein the at least one inner vertical rib (4) is essentially perpendicular to the central portion (3).

10. The adapter of any of claims 8 or 9, wherein the at least one inner vertical rib (4) comprises an internal edge (7) and a width (W) defined by the horizontal distance between the central portion (3) and the internal edge (7) of the at least one inner vertical rib (4).

11. The adapter of claim 10, wherein the width (W) of the at least one vertical rib (4) is variable along at least partially, a height of the central portion (3).

12. The adapter of claim 11, wherein the width (W) of the at least one vertical rib (4) decreases from the lower flange (1) to the upper flange (2).

13. The adapter of claim 11, wherein the width (W) of the at least one vertical rib (4) decreases from the lower flange (1) to an intermediate position between the lower flange (1) and the upper flange (2).

14. The adapter of claim 11, wherein the width (W) of the at least one vertical rib (4) increases from the lower flange (1) to the upper flange (2).

15. The adapter of claim 11, wherein the width (W) of the at least one vertical rib (4) increases from the lower flange (1) to an intermediate position between the lower flange (1) and the upper flange (2).

16. The adapter of any of claims 3 to 15, wherein the horizontal flange (5) comprises a plurality of holes (6) configured to allow passage of the plurality of tensioning elements (30); wherein the horizontal flange (5) comprises holes (6) exclusively of the type of the plurality of holes (6) configured to allow the passage, in use, of the plurality of tensioning elements (30).

17. The adapter of any of previous claims, wherein the adapter is made of steel or cast iron.

18. Tower (100) of a wind turbine comprising the adapter (20) of any of claims 1 to 17, a central vertical axis (A1), at least one concrete section (50) comprising at least one concrete segment (10) and at least one tensioning element (30) configured to tension the tower (100).

19. The tower (100) of claim 18, further comprising at least one steel section (40) disposed above the adapter (20).

20. Method of erecting a tower (100) of a wind turbine, wherein the tower (100) comprises the adapter (20), a central vertical axis (A1), at least one concrete section (50) and at least one tensioning element (30) configured to tension the tower (100);
wherein the concrete section (50) comprises:
- at least one concrete segment (10) comprising an inner wall (12) which in turn comprises an upper end (13);
wherein the adapter (20) comprises:
- a lower flange (1) configured to be joined to the at least one concrete segment (10);
- an upper flange (2) configured to be joined to an upper steel section (40) or a wind turbine component; and
- a central portion (3) joining the lower flange (1) and the upper flange (2);
wherein the at least one tensioning element (30) is disposed at a first distance (d1) from the central vertical axis (A1), wherein the first distance (d1) is smaller than a second distance (d2) defined from the central vertical axis (A1) to the inner wall (12) of the at least one concrete segment (10);
**characterized in that** the method comprises:
- a step of erecting the concrete section (50);
- a step of erecting the adapter (20) above the concrete section (50);
- a step of tensioning the tower by anchoring the at least one tensioning element (30) to the adapter (20) at a first distance (d1) from the central vertical axis (A1), wherein the first distance (d1) is smaller than a second distance (d2) defined from the central vertical axis (A1) to the inner wall (12) of the at least one concrete segment (10).
